# FASCICULE DE BREVET EUROPEEN

(11) **EP 2 923 883 B1**
(45) Date de publication et mention de la délivrance du brevet: **16.08.2017**
(21) Numéro de dépôt: 15160741.3
(22) Date de dépôt: 25.03.2015
(51) Int. Cl.: B60M 1/36, B60M 7/00, B60L 5/39, B60M 1/08, B60M 1/30, B60M 3/04

(54) **SYSTÈME D'ALIMENTATION PAR LE SOL POUR VÉHICULES ÉLECTRIQUES NON GUIDÉS ET PROCÉDÉ D'UTILISATION ASSOCIÉ**
STROMVERSORGUNGSSYSTEM ÜBER DEN BODEN FÜR AUTONOME ELEKTROFAHRZEUGE, UND ENTSPRECHENDES EINSATZVERFAHREN
SYSTEM FOR SUPPLYING POWER VIA THE GROUND FOR FREE-WHEELED ELECTRIC VEHICLES AND METHOD OF USE THEREOF

(30) Priorité: 25.03.2014 FR 1452525
(43) Date de publication de la demande: 30.09.2015
(73) Titulaire: ALSTOM Transport Technologies, 93400 Saint-Ouen (FR)
(72) Inventeur: Hourtane, Jean-Luc, 13320 BOUC BEL AIR (FR)
(74) Mandataire: Lavoix

(56) Documents cités:
- EP-A1- 1 582 396
- AU-B2- 712 902
- DD-A3- 279 792
- US-A- 4 139 071

## Description

L'invention a pour domaine celui des systèmes d'alimentation par le sol pour véhicules électriques non guidés et leurs procédés d'utilisation.

Les véhicules à propulsion électrique sont vus comme une alternative aux véhicules à propulsion thermique, dans le but de réduire l'émission de gaz à effet de serre.

Un véhicule électrique comporte une batterie rechargeable et un moteur électrique, alimenté par la batterie et permettant de propulser le véhicule.

Pour les véhicules électriques non guidés (c'est-à-dire les camions, les camionnettes, les voitures de tourisme, etc.) il est connu de recharger la batterie du véhicule, lorsque celui-ci est à l'arrêt, en connectant la batterie à une borne de recharge, au moyen d'un câble électrique.

Il a été également proposé de recharger la batterie d'un véhicule électrique non guidé au cours de son déplacement. Pour ce faire, deux types de systèmes sont envisagés : les systèmes d'alimentation par induction et les systèmes d'alimentation par conduction.

Parmi les systèmes d'alimentation par conduction, le document WO 2010 140964 divulgue une chaussée dont la surface est munie de deux rainures parallèles entre elles et s'étendant longitudinalement selon la direction de la chaussée. A l'intérieur de chacune des rainures circule(nt) un ou plusieurs rails d'alimentation en courant électrique.

Pour capter le courant électrique, le véhicule électrique non guidé est muni d'une perche dont l'extrémité est propre à pénétrer dans les rainures de la chaussée de manière à venir en contact électrique avec les rails d'alimentation.

Les rails d'alimentation sont subdivisés en segments longitudinaux.

Un segment est relié à une source de tension au travers d'un interrupteur qui est commandé en fonction d'un signal relatif à la position du véhicule à alimenter. Dans le document précité, ce signal de position est généré lors de la détection portée par le véhicule, par une boucle magnétique intégrée à la chaussée et circulant le long du segment considéré, d'une étiquette du type RFID (pour « Radio Frequency Identification » en anglais). Lors de la réception d'un tel signal de position, un dispositif de commande ferme l'interrupteur de manière à ce que le segment considéré soit connecté
électriquement à la source de tension

Le document US 4139071 divulgue un système d'alimentation par le sol pour un véhicule non-guidé ayant une paire de pistes et une source de tension propre à délivrer une tension d'alimentation basse. Les segments des pistes sont connectés par un moyen interrupteur, à la source de tension.

L'invention a pour but de proposer un système amélioré d'alimentation par le sol du type par conduction.

L'invention a pour objet un système d'alimentation par le sol pour un véhicule électrique non-guidé, ayant une paire de pistes d'alimentation comportant une piste conductrice dite de phase propre à être portée à une tension d'alimentation, et une piste conductrice dite de neutre pour le retour du courant, la piste de neutre circulant parallèlement à la piste de phase et la piste de phase étant constituée d'une pluralité de segments rectangulaires, disposés bout à bout, chaque segment étant isolé électriquement de ses voisins, caractérisé en ce que :
- le système comporte une première source de tension propre à délivrer une tension d'alimentation basse et une seconde source de tension propre à délivrer une tension d'alimentation élevée;
- chaque segment est connecté par un moyen de sélection commandé soit à la première source, soit à la seconde source de tension ;
- le système comporte au moins un moyen de mesure de vitesse propre à mesurer la vitesse instantanée d'un véhicule électrique non guidé circulant sur une section d'une chaussée équipée du système ; et,
- un dispositif de sélection propre à acquérir la vitesse instantanée d'un véhicule mesurée par le moyen de mesure de vitesse, à comparer la vitesse mesurée à une vitesse seuil et à commander le ou chaque moyen de sélection en fonction du résultat de la comparaison.

Suivant des modes particuliers de réalisation, le système comporte une ou plusieurs des caractéristiques suivantes, prise(s) isolément ou suivant toutes les combinaisons techniquement possibles :
- le dispositif de sélection est tel que si la vitesse mesurée est inférieure à la vitesse seuil, le ou chaque moyen de sélection est commandé de façon que chaque segment de la section soit connecté à la première source ; et si la vitesse mesurée est supérieure ou égale à la vitesse seuil, le ou chaque moyen de sélection est commandé de façon que chaque segment de la section soit connecté à la seconde source de tension.
- chaque segment de la piste conductrice de phase est connecté électriquement au moyen de sélection commandé via un interrupteur commandé, propre à être basculé par un moyen de commande en fonction de la présence d'un véhicule à l'aplomb du segment considéré ou sur un segment adjacent, pour appliquer au segment considéré de la piste de phase, la tension d'alimentation délivrée par la source de tension sélectionnée par le moyen de sélection.
- la première source de tension est propre à délivrer une tension inférieure à 60 V et une puissance compatible avec le fonctionnement de moyens électriques auxiliaires du véhicule à alimenter, et la seconde source de tension est propre à délivrer une tension élevée et une puissance compatible avec le fonctionnement de moyens électriques principaux du véhicule à alimenter.

- le moyen de mesure de vitesse est une unité de mesure de vitesse comportant un calculateur connecté à un capteur de vitesse, le capteur étant propre à générer un signal à partir duquel le calculateur est propre à déterminer une mesure de la vitesse d'un véhicule circulant sur la section de chaussée.
- le moyen de mesure de vitesse est un système de mesure de vitesse comportant un calculateur connecté à une pluralité d'antenne, chaque antenne étant associée à un segment et comportant au moins deux lobes distant l'un de l'autre selon une direction longitudinale de la chaussée, chaque antenne étant propre à capter un signal émis par un émetteur adapté dont est muni un patin du véhicule, et à générer un signal à partir duquel le calculateur est propre à déterminer la vitesse instantanée du véhicule.
- l'antenne du moyen de mesure de vitesse est asymétrique de manière à permettre la détermination du sens de la vitesse instantanée du véhicule.

L'invention a également pour objet un procédé d'utilisation d'un système d'alimentation par le sol conforme au système ci-dessus, comportant les étapes consistant à :
- acquérir une mesure de la vitesse instantanée d'un véhicule ;
- comparer la vitesse mesurée à une vitesse seuil ; et,
si la vitesse mesurée est inférieure à la vitesse seuil, commander le moyen de sélection de chaque segment d'une section de chaussée sur laquelle circule le véhicule pour qu'il soit connecté à la première source de tension, propre à délivrer une tension d'alimentation basse ; ou
si la vitesse instantanée est supérieure ou égale à la vitesse seuil, commander le moyen de sélection de chaque segment d'une section de chaussée sur laquelle circule le véhicule pour qu'il soit connecté à la seconde source de tension, propre à délivrer une tension d'alimentation élevée.

L'invention sera mieux comprise à la lecture de la description qui va suivre d'un mode de réalisation particulier, donné uniquement à titre illustratif et non limitatif, et faite en se référant aux dessins annexés sur lesquels :
- la figure 1 est une vue de dos représentant schématiquement un véhicule électrique non guidé circulant sur une chaussée équipée du système d'alimentation par le sol selon l'invention ;
- la figure 2 est une vue de dessus de la figure 1 ;
- la figure 3 est une représentation schématique d'un premier mode de réalisation du système d'alimentation par le sol selon l'invention ;
- la figure 4 est une représentation schématique sous forme de blocs d'un procédé d'utilisation du système de la figure 3 ; et,
- la figure 5 est une représentation schématique d'un second mode de réalisation du système d'alimentation par le sol selon l'invention.

Fort de son expérience dans le domaine des systèmes d'alimentation par le sol du type par conduction, pour des véhicules électriques guidés, c'est-à-dire contraints à se déplacer le long de voies (en particulier de tramways se déplaçant le long de voies ferrées), la demanderesse à développer le présent système d'alimentation par le sol pour des véhicules électriques non guidés.

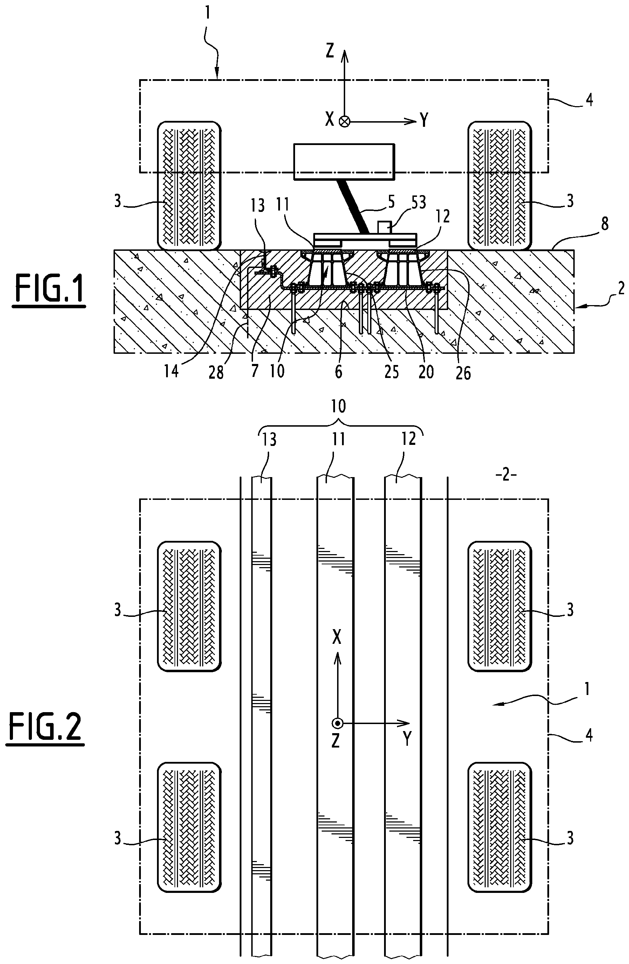

Sur les figures 1 et 2, est représentée une voiture 1, en tant que véhicule électrique non guidé, circulant sur une chaussée 2. Bien évidemment, différents types de véhicules non guidés seront amenés à circuler sur la chaussée 2 en utilisant le système d'alimentation par le sol. Ainsi, le terme de véhicule électrique non guidé regroupe les camions de marchandises, les cars de transport de passagers, les voitures de tourisme, les motos, etc.

Un trièdre XYZ est associé de manière classique à la voiture 1 : l'axe X selon la direction longitudinale, orienté vers l'avant ; l'axe Y selon la direction transversale, orienté de gauche à droite ; et l'axe Z selon la direction verticale, orienté de bas en haut.

La voiture 1 comporte une caisse 4 et des roues 3, dont certaines directrices. La voiture 1 comporte des moyens de direction (non représentés) permettant à un conducteur de modifier l'angle des roues directrices dans le plan XY de manière à diriger le véhicule 1.

La voiture 1 comporte une batterie rechargeable et un moteur électrique (non représentés). En traction, ces moyens électriques principaux requièrent une puissance de l'ordre de 30 kW.

La voiture 1 est équipée d'un moyen de captation permettant de collecter une puissance électrique au cours du déplacement de la voiture 1. Les moyens de captation sont référencés de manière générale par le chiffre 5 sur la figure 1.

Le moyen de captation 5 comporte un patin propre à être mis en contact glissant sur une paire de pistes d'alimentation du système d'alimentation par le sol, qui va maintenant être décrit.

La chaussée 2 comporte une tranchée 6 à l'intérieur de laquelle est positionné le système d'alimentation par le sol, référencé de manière générale par le chiffre 10.

Une fois le système 10 mis en position dans la tranchée 6, celle-ci est remplie de béton 7 de manière à ce que la surface supérieure 8 de la chaussée 2 soit continue sur toute la largeur de celle-ci. La surface supérieure 8 est sensiblement plane.

En position, le système 10 présente, affleurant à la surface 8 de la chaussée 2 :
- une piste conductrice de phase 11, destinée à être connectée électriquement soit à une première source de puissance électrique, soit à une seconde source de puissance électrique, soit au potentiel de terre environnante, comme cela sera décrit ci-dessous ;
- une piste conductrice de neutre 12, destinée à être connectée électriquement à un potentiel de référence V_{ref}, par exemple de 0 V ;
- une piste conductrice de protection 13, destinée à être connectée électriquement à un potentiel de terre Vₜₑᵣᵣₑ.

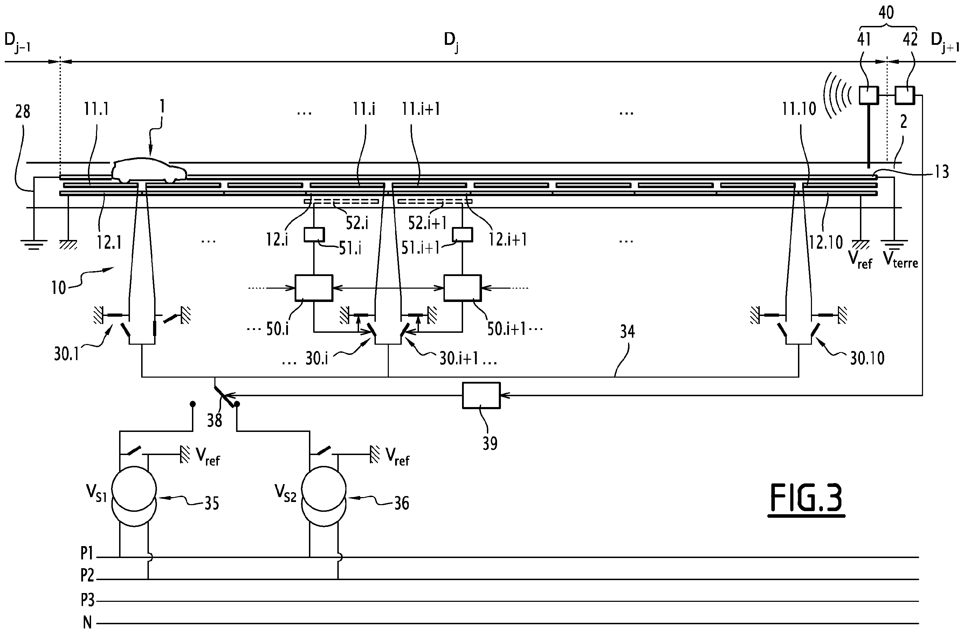

La piste de phase 11 est constituée d'une pluralité de segments (11.i sur la figure 3) qui, dans le mode de réalisation actuellement envisagé, présentent chacun une largeur de 10 cm et une longueur de 22 m.

Les segments sont disposés bout à bout pour constituer la piste de phase 11.

Les segments sont isolés électriquement les uns des autres.

Avantageusement, la piste de neutre 12 est réalisée en utilisant des segments identiques à ceux utilisés pour la piste de phase 11. Ainsi, la piste 12 est constituée d'une pluralité de segments (12.i sur la figure 3) présentant une largeur d'environ 10 cm et une longueur d'environ 22 m.

L'isolation entre les segments consécutifs de la piste de neutre 12 est ici de même nature que celle de la piste de phase 11. Cependant bien qu'une segmentation soit nécessaire pour des raisons mécaniques (dilatation), le niveau de rigidité diélectrique entre segments n'est pas nécessairement aussi élevé que celui entre segments de la piste de phase 11.

La piste de neutre 12 circule parallèlement à la piste de phase 11, sur un premier côté de celle-ci. Le bord latéral de la piste de phase 11 et le bord latéral de la piste de neutre 12, qui sont en regard l'un de l'autre, sont espacés d'une première distance de 15 cm environ.

La piste de protection 13 est constituée par la face supérieure d'un profilé 14 scellé dans le béton 7 remplissant la tranchée 6.

Dans le mode de réalisation actuellement préféré, le profilé 14 présente une section en forme de « I », dont l'âme centrale est disposée sensiblement verticalement.

La piste de protection 13 est disposée parallèlement à la piste de phase 11, sur un second côté de celle-ci. Ce second côté est opposé au premier côté de la piste de phase 11 comportant la piste de neutre 12.

Le bord latéral de la piste de phase 11 et le bord latéral de la piste de protection 13, qui sont en regard l'un de l'autre, sont espacés d'une seconde distance de 15 cm environ.

La fonction de la piste de protection 13 est de constituer, sur le second côté, un moyen de collecte des électrons d'un courant de fuite provenant de la piste conductrice de phase 11.

Les fuites de courant vers le premier côté sont collectées par la piste de neutre 12.

Dans le mode de réalisation envisagé, la largeur de la piste de protection 13 est d'environ 5 cm.

Avec ce choix particulier de valeurs pour les dimensions transversales des différentes pistes et de leur espacement mutuel, le système d'alimentation par le sol 10 présente une largeur totale d'environ 55 cm. Cette largeur totale est choisie pour rester inférieure à l'entraxe du plus petit véhicule électrique non-guidé susceptible de circuler sur la chaussée 2 et d'utiliser le système 10.

Lorsque la piste de phase 11 est portée à un potentiel élevé, toute fuite de courant, due par exemple à la présence d'une flaque ou d'un film d'eau sur la surface 8 de la chaussée, est collectée sur le premier côté par la piste de neutre 12 et sur le second côté par la piste de protection 13. Cela empêche que la portion de la surface de la chaussée portée à un potentiel élevé ne s'étende latéralement au-delà de la largeur du système d'alimentation par le sol 10. En choisissant la largeur totale du système d'alimentation par le sol 10 inférieure à l'entraxe du plus petit véhicule autorisé à circuler sur la chaussée 2 et propre à utiliser le système 10, on garantit que si un piéton se trouve latéralement sur le premier ou le second côté d'un segment de la piste de phase 11, mais au-delà soit de la piste de neutre 12 soit de la piste de protection 13, le piéton ne sera pas électrocuté si ce segment est porté à un potentiel élevé.

Pour faciliter la mise en place du système 10, celui-ci comporte un ensemble de support des différentes pistes.

L'ensemble de support comporte une embase 20 portant deux profilés de support 25 et 26, identiques entre eux, et servant de support isolant aux pistes conductrices de phase 11 et de neutre 12. Ces pistes sont fixées mécaniquement sur les profilés de supports, mais sont isolées électriquement de ces derniers.

L'embase 20 porte également le profilé 14.

Un câble électrique 28, fixé à l'âme du profilé 14, est destiné à être enfoui dans la chaussée 2, avantageusement au-delà de la tranchée 6, de manière à mettre la piste de protection 13 au potentiel de terre Vₜₑᵣᵣₑ, et par continuité électrique l'embase 20.

L'embase 20 est munie d'une pluralité de tirant 29, réglables en hauteur, propres à être fichés dans le fond de la tranchée 6 de manière à prépositionner le système d'alimentation par le sol 10 de sorte que le niveau des pistes soient affleurant à la surface 8 de la chaussée 2 à réaliser.

Puis, du béton est coulé de manière à noyer l'ensemble de support. Les profilés de supports 25 et 26 ainsi que le profilé 14 sont alors scellés dans la couche de béton 7. Avantageusement, l'état de la surface supérieure de la couche de béton est travaillé pour présenter une adhérence adaptée aux pneumatiques des véhicules circulant sur la chaussée 2.

La paire de pistes d'alimentation, constituée de la piste de phase 11 et de la piste de neutre 12, ainsi que la piste de protection 13 sont affleurantes à la surface 8 de la chaussée 2. Plus précisément, les pistes 11 et 12 font légèrement saillie au-dessus de la surface 8 de la chaussée 2, par exemple d'une hauteur de l'ordre de quelques millimètres, notamment égale à 2 mm. La piste 13 est au niveau de surface 8 de la chaussée 2.

Un schéma électrique du système 10 est donné à la figure 3.

Le système 10 est subdivisé en sections longitudinales. La section Dj est située entre des sections adjacentes Dj-1 et Dj+1.

Une section Dj correspond à une pluralité de segments 11.i de la piste de phase 11. Sur la figure 3, dix segments 11.i composent une section Dj.

Chaque segment de la pluralité de segments 11.i d'une section Dj est connecté électriquement, via un interrupteur commandé 30.i dédié, à une ligne d'alimentation 34.

La ligne d'alimentation 34 est commune aux différents segments 11.i de la section Dj considérée.

La ligne d'alimentation 34 de la section Dj est connectée, via un moyen de sélection 38, soit à une première source de puissance électrique 35, soit à une seconde source de puissance électrique 36, soit au potentiel de la terre environnante.

La source 35 est propre par exemple à délivrer une tension basse Vₛ₁ de 48 V DC. La source 35 est en fait une station relais propre à convertir un courant triphasé en un courant biphasé.

La source 36 est propre par exemple à délivrer une tension élevée Vₛ₂ de 750 V DC. La source 36 est en fait une station relais propre à convertir un courant triphasé en un courant biphasé.

Le moyen de sélection 38 est commandé par un dispositif de sélection 39 apte à acquérir une mesure de vitesse délivrée par un moyen de mesure de vitesse.

Dans le premier mode de réalisation, le moyen de mesure de vitesse est une unité de mesure de vitesse 40 équipant chaque section de chaussée Dj.

L'unité 40 comporte un capteur de vitesse 41 connecté à un calculateur 42. Pour chaque véhicule circulant sur la section de chaussée Dj, le capteur 41 est propre à générer un signal de mesure, à partir duquel le calculateur 42 est propre à déterminer une mesure de la vitesse instantanée du véhicule.

Le dispositif de sélection 39 comporte :
- un module d'acquisition propre à acquérir une mesure de vitesse réalisée par l'unité de mesure de vitesse 40 ;
- un module de comparaison propre à comparer la mesure de la vitesse instantanée acquise, à une vitesse seuil V₀, de 60 km/h par exemple ; et
- un module de commande propre, en fonction du résultat de la comparaison, de basculer le moyen de sélection 38 soit dans une première position, permettant de connecter la ligne d'alimentation 34 à la première source 35, soit dans une seconde position, permettant de connecter la ligne d'alimentation 34 à la seconde source 36.

Chaque interrupteur 30.i est commandé par un dispositif de commande 50.i dédié apte à acquérir un signal de position délivré par un moyen de mesure de position comportant un calculateur 51.i connecté à une antenne 52.i.

L'antenne 52.i circule dans la chaussée 2, pour former une boucle autour du segment 11.i correspondant, de manière à détecter la présence d'un véhicule au-dessus du segment 11.i. Plus précisément, l'antenne 52.i circule dans des canaux longitudinaux prévus dans chacun des bords latéraux du profilé 25 de support de la piste de phase.

Le véhicule est équipé d'un patin comportant un émetteur 53 (figure 1) propre à émettre, en continu, un signal radio ayant par exemple une fréquence caractéristique de 500 kHz.

Le signal collecté par l'antenne est appliqué en entrée du calculateur 50.i qui est propre à déterminer une mesure de la position du véhicule et à la transmettre au dispositif de commande 50.i.

Lors de la détection d'une voiture 1, le dispositif de commande 50.i est propre à fermer l'interrupteur 30.i.

Le procédé d'utilisation du système 10 venant d'être décrit est le suivant.

Lorsqu'une voiture 1 entre sur la section Dj, l'unité de mesure de vitesse 40 mesure sa vitesse instantanée V (étape 110).

Le dispositif de sélection 39 acquiert cette valeur de la vitesse instantanée, délivrée en sortie de l'unité de mesure de vitesse 40, et la compare à la vitesse seuil V₀ (étape 120).

Lorsque la vitesse mesurée est inférieure à la vitesse seuil V₀, pour tous les véhicules circulant sur la section, le dispositif de sélection 39 bascule le moyen de sélection 38 dans la première position pour connecter la ligne d'alimentation 34 à la première source 35 (étape 130).

Au contraire, lorsque la vitesse mesurée pour au moins l'un des véhicules circulant sur la section considérée est supérieure ou égale à la vitesse seuil V₀, le dispositif de sélection 39 bascule le moyen de sélection 38 dans la seconde position pour connecter la ligne d'alimentation 34 à la seconde source 36 (étape 140).

La voiture se déplace le long de la section Dj.

Les interrupteurs commandés 30.i du segment Dj sont ouverts par défaut.

Lorsque le capteur de position 51.i détecte la présence de la voiture 1 au-dessus du segment 11.i (étape 140), le dispositif de commande 50.i ferme l'interrupteur 30.i pour connecter le segment 11.i à la ligne d'alimentation 34 (étape 150).

L'interrupteur 30.i reste fermé tant que le capteur de position détecte la présence de la voiture.

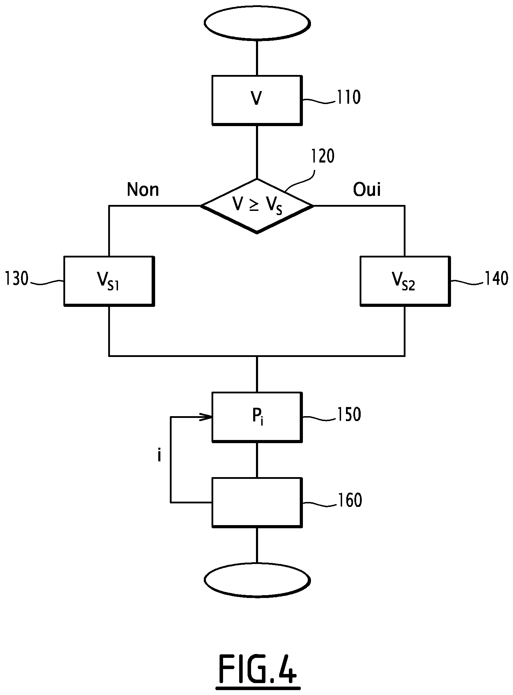

Les différents segments de la piste de phase 11 sont successivement activés (boucle sur i de la figure 4) en synchronisation avec le déplacement de la voiture 1 le long de la chaussée 2.

Le moyen de collecte 5 de la voiture 1, frottant simultanément sur les pistes de phase 11 et de neutre 12, permet la captation d'un courant d'alimentation. Un moyen d'aiguillage du moyen de collecte 5 est propre à déterminer la tension d'alimentation.

Si la tension mesurée est basse, le courant d'alimentation est utilisé pour recharger ou faire fonctionner les moyens électriques auxiliaires du véhicule.

Si la tension est élevée, le courant d'alimentation est utilisé pour recharger la batterie ou faire fonctionner le moteur du véhicule.

La voiture 1 parcourt ainsi l'intégralité de la section Dj avant de passer sur la section suivante Dj+1. Le procédé est alors itéré sur cette nouvelle section.

Comme indiqué ci-dessus, le potentiel auquel sont portés les segments est sélectionné en fonction de la vitesse de la voiture 1.

Si la voiture 1 est prise dans un embouteillage et circule à faible allure, le potentiel électrique auquel est portée la piste de phase 11 est bas éventuellement nul, en tout cas inférieur à une limite de 60 V au-delà de laquelle un piéton risque d'être électrocuté. Ce potentiel électrique bas permet de transférer une puissance réduite à la voiture, compatible avec le fonctionnement des moyens électriques auxiliaires de celle-ci.

Si la voiture 1 circule normalement à une vitesse supérieure à la vitesse seuil qui est associée à la section de la chaussée sur laquelle est engagée la voiture, le potentiel électrique auquel est portée la piste de phase 11 est élevé. Ce potentiel électrique élevé permet de transférer une puissance importante à la voiture, compatible avec le fonctionnement des moyens électriques principaux de la voiture.

Il est à noter que les segments 11.i sont alimentés successivement, de sorte qu'un segment ou éventuellement deux segments sont au potentiel de 750 V à un instant donné. Ainsi, la portion de la surface de la chaussée portée à un potentiel, dangereux pour un piéton, ne s'étend pas longitudinalement au-delà de la longueur d'un segment ou de deux segments au maximum. C'est la raison pour laquelle, la longueur des segments est choisie pour correspondre sensiblement à la distance parcourue pendant le temps d'esquive devant le véhicule ou d'accès au segment conducteur derrière le véhicule, le véhicule roulant à 60 km/h.

Ainsi la sélection adaptée de la source de tension en fonction de la vitesse du véhicule à alimenter participe à la sécurité du système 10.

De nombreuses variantes de réalisation du procédé d'utilisation du système d'alimentation par le sol sont envisageables.

Ainsi, lorsque plusieurs véhicules sont engagés simultanément sur la section Dj de la chaussée, c'est le véhicule dont la vitesse est la plus élevée qui déclenche le basculement du moyen de sélection de la première position vers la seconde position, ou inversement comme indiqué ci-dessus.

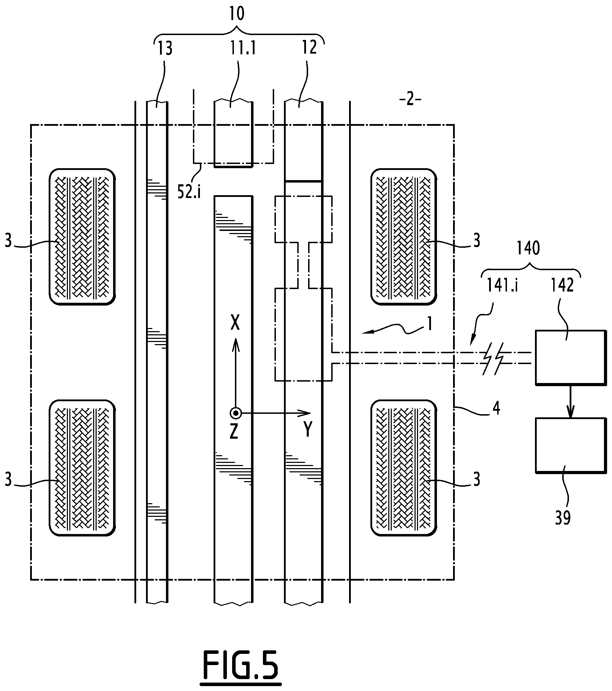

Un second mode de réalisation va maintenant être présenté en référence à la figure 5.

Sur cette figure, un élément identique à un élément du premier mode de réalisation est référencé par le chiffre de référence utilisé sur les figures 1 à 3 pour désigner cet élément identique.

Dans ce second mode de réalisation, le moyen de mesure de vitesse est un système de mesure de vitesse 140 comportant une pluralité d'antennes 141.i connectées à un calculateur 142. Chaque antenne 141.i est associée à un segment 11.i.

Une antenne 141.i forme une boucle implantée dans le sol, juste en amont (selon le sens de circulation des véhicules sur la chaussée) du segment 11.i associé.

L'antenne 141.i circule par exemple dans les canaux prévus sur les bords du profilé de support de la piste de neutre.

L'antenne est conformée de manière à définir au moins deux lobes distant l'un de l'autre d'un intervalle déterminé selon un axe de l'antenne. L'antenne est implantée de manière à ce que les deux lobes soient disposés successivement selon la direction longitudinale de la chaussée.

Le premier lobe présente une longueur d'environ 1 mètre, tandis que le second lobe présente une longueur d'environ 50 cm. Les deux lobes sont séparés d'un intervalle de 50 cm.

L'antenne est propre à capter le signal émis par l'émetteur 53 équipant le patin d'un véhicule, lorsque ce patin passe à moins de 15 cm environ de l'antenne 141.i. Le signal correspondant est appliqué en entrée du calculateur 142, qui est propre à déterminer une mesure de la vitesse instantanée du véhicule.

Le signal généré par l'antenne 141.i correspond au signal émis par l'émetteur 53 du véhicule, convolué avec une fonction créneaux correspondant à la forme de l'antenne 141.i et à la vitesse instantanée du véhicule. Dans le cas présent, la fonction créneaux comporte un premier niveau haut, correspondant au premier lobe, un niveau intermédiaire bas, correspondant à l'intervalle entre les premier et second lobes, et un second niveau haut, correspondant au second lobe.

Le premier niveau haut présente une durée sensiblement deux fois plus longue que celle du second niveau haut. Ainsi, l'asymétrie géométrique de l'antenne permet de déterminer le sens de circulation du véhicule sur la chaussée.

La durée de chaque niveau permet de déterminer avec précision la vitesse instantanée du véhicule.

La vitesse calculée est passée au dispositif de sélection 39 du niveau de tension à appliquer à la piste de phase.

En variante de ce mode de réalisation, l'antenne peut comporter plus de deux lobes espacés les uns des autres spatialement de manière à déterminer une vitesse instantanée du véhicule en sécurité.

Il est à noter que la valeur de la vitesse seuil a été déterminée en fonction de la longueur d'un segment. En effet, à la vitesse seuil, la distance d'esquive devant le véhicule ou d'accès derrière le véhicule est égale à la longueur d'un segment de piste. En conséquence, pour un piéton le danger ne vient pas d'un risque d'électrocution lors de l'alimentation du segment, mais d'être écrasé par le véhicule lui-même. Pour un segment de 22 m et les distances minimales de freinage indiquées par la sécurité routière, la vitesse seuil est d'environ 60 km/h.

## Revendications

1. Système d'alimentation par le sol (10) pour un véhicule électrique non-guidé (1), ayant une paire de pistes d'alimentation comportant une piste conductrice dite de phase (11) propre à être portée à une tension d'alimentation, et une piste conductrice dite de neutre (12) pour le retour du courant, la piste de neutre circulant parallèlement à la piste de phase et la piste de phase étant constituée d'une pluralité de segments (11.i) rectangulaires, disposés bout à bout, chaque segment étant isolé électriquement de ses voisins, **caractérisé en ce que** :
- le système comporte une première source de tension (35) propre à délivrer une tension d'alimentation basse (V_{S1}) et une seconde source de tension (36) propre à délivrer une tension d'alimentation élevée (V_{S2});
- chaque segment est connecté par un moyen de sélection (38) commandé soit à la première source, soit à la seconde source de tension ;
- le système comporte au moins un moyen de mesure de vitesse (40 ; 140) propre à mesurer la vitesse instantanée d'un véhicule électrique non guidé circulant sur une section (Dj) d'une chaussée équipée du système ; et,
- un dispositif de sélection (39) propre à acquérir la vitesse instantanée d'un véhicule mesurée par le moyen de mesure de vitesse, à comparer la vitesse mesurée à une vitesse seuil (V₀) et à commander le ou chaque moyen de sélection en fonction du résultat de la comparaison.

2. Système d'alimentation selon la revendication 1, dans lequel le dispositif de sélection (39) est tel que si la vitesse mesurée est inférieure à la vitesse seuil, le ou chaque moyen de sélection est commandé de façon que chaque segment de la section soit connecté à la première source ; et si la vitesse mesurée est supérieure ou égale à la vitesse seuil, le ou chaque moyen de sélection est commandé de façon que chaque segment de la section soit connecté à la seconde source de tension.

3. Système selon la revendication 1 ou la revendication 2, dans lequel chaque segment (11.i) de la piste conductrice de phase (11) est connecté électriquement au moyen de sélection commandé (38) via un interrupteur commandé (30.i), propre à être basculé par un moyen de commande (50.i) en fonction de la présence d'un véhicule à l'aplomb du segment considéré ou sur un segment adjacent, pour appliquer au segment considéré de la piste de phase, la tension d'alimentation délivrée par la source de tension sélectionnée par le moyen de sélection.

4. Système selon l'une quelconque des revendications 1 à 3, dans lequel la première source de tension (V_{S1}) est propre à délivrer une tension inférieure à 60 V et une puissance compatible avec le fonctionnement de moyens électriques auxiliaires du véhicule à alimenter, et en ce que la seconde source de tension (V_{S2}) est propre à délivrer une tension élevée et une puissance compatible avec le fonctionnement de moyens électriques principaux du véhicule à alimenter.

5. Système selon l'une quelconque des revendications 1 à 4, dans lequel le moyen de mesure de vitesse est une unité de mesure de vitesse (40) comportant un calculateur (42) connecté à un capteur de vitesse (41), le capteur étant propre à générer un signal à partir duquel le calculateur est propre à déterminer une mesure de la vitesse d'un véhicule circulant sur la section de chaussée.

6. Système selon l'une quelconque des revendications 1 à 4, dans lequel le moyen de mesure de vitesse est un système de mesure de vitesse (140) comportant un calculateur (142) connecté à une pluralité d'antenne (141.i), chaque antenne étant associée à un segment (11.i) et comportant au moins deux lobes distant l'un de l'autre selon une direction longitudinale de la chaussée, chaque antenne étant propre à capter un signal émis par un émetteur adapté dont est muni un patin du véhicule, et à générer un signal à partir duquel le calculateur est propre à déterminer la vitesse instantanée du véhicule.

7. Système selon la revendication 6, dans lequel l'antenne du moyen de mesure de vitesse est asymétrique de manière à permettre la détermination du sens de la vitesse instantanée du véhicule.

8. Procédé d'utilisation d'un système d'alimentation par le sol conforme à l'une quelconque des revendications 1 à 7, comportant les étapes consistant à :
- acquérir une mesure de la vitesse instantanée d'un véhicule ;
- comparer la vitesse mesurée à une vitesse seuil (V₀) ; et,
si la vitesse mesurée est inférieure à la vitesse seuil, commander le moyen de sélection (38) de chaque segment d'une section de chaussée sur laquelle circule le véhicule pour qu'il soit connecté à la première source de tension (V_{S1}), propre à délivrer une tension d'alimentation basse ; ou
si la vitesse instantanée est supérieure ou égale à la vitesse seuil, commander le moyen de sélection (38) de chaque segment d'une section de chaussée sur laquelle circule le véhicule pour qu'il soit connecté à la seconde source de tension (V_{S2}), propre à délivrer une tension d'alimentation élevée.

## Patentansprüche

1. System für die Versorgung durch den Boden (10) für ein nicht geführtes Elektrofahrzeug (1), das ein Paar Versorgungsbahnen besitzt, die eine leitende Bahn, die Phasenleiter (11) genannt wird und auf einer Versorgungsspannung gehalten werden kann, und eine leitende Bahn, die Neutralleiter (12) genannt wird und der Rückführung des Stroms dient, umfasst, wobei die Neutralleiterbahn parallel zu der Phasenleiterbahn verläuft und wobei die Phasenleiterbahn durch mehrere rechtwinklige Segmente (11.i) gebildet ist, die nebeneinander angeordnet sind, wobei jedes Segment von seinen Nachbarn elektrisch isoliert ist, **dadurch gekennzeichnet, dass**:
- das System eine erste Spannungsquelle (35), die eine niedrige Versorgungsspannung (V_{S1}) liefern kann, und eine zweite Spannungsquelle (36), die eine hohe Versorgungsspannung (V_{S2}) liefern kann, umfasst;
- jedes Segment durch ein gesteuertes Auswahlmittel (38) entweder mit der ersten Quelle oder mit der zweiten Spannungsquelle verbunden ist;
- das System wenigstens umfasst: ein Geschwindigkeitsmessmittel (40; 140), das die aktuelle Geschwindigkeit des nicht geführten Elektrofahrzeugs, das auf einen Abschnitt (Dj) einer mit dem System ausgestatteten Straße fährt, messen kann; und
- eine Auswahlvorrichtung (39), die die aktuelle Geschwindigkeit eines Fahrzeugs, die durch das Geschwindigkeitsmessmittel gemessen wird, erfassen kann, die gemessene Geschwindigkeit mit einer Schwellengeschwindigkeit (V₀) vergleichen kann und das oder jedes Auswahlmittel als Funktion des Ergebnisses des Vergleichs steuern kann.

2. Versorgungssystem nach Anspruch 1, wobei die Auswahlvorrichtung (39) so beschaffen ist, dass dann, wenn die gemessene Geschwindigkeit niedriger als die Schwellengeschwindigkeit ist, das oder jedes Auswahlmittel in der Weise gesteuert wird, dass jedes Segment des Abschnitts mit der ersten Quelle verbunden wird; und dann, wenn die gemessene Geschwindigkeit höher oder gleich der Schwellengeschwindigkeit ist, das oder jedes Auswahlmittel in der Weise gesteuert wird, dass jedes Segment des Abschnitts mit der zweiten Spannungsquelle verbunden wird.

3. System nach Anspruch 1 oder Anspruch 2, wobei jedes Segment (11.i) der Phasenleiterbahn (11) mit dem gesteuerten Auswahlmittel (38) über einen gesteuerten Ein/Aus-Schalter (30.i), der durch ein Steuermittel (50.i) als Funktion der Anwesenheit eines Fahrzeugs senkrecht über dem betrachteten Segment oder auf einem benachbarten Segment geschaltet werden kann, elektrisch verbunden ist, um an das betrachtete Segment der Phasenleiterbahn die von der durch das Auswahlmittel ausgewählten Spannungsquelle gelieferte Versorgungsspannung anzulegen.

4. System nach einem der Ansprüche 1 bis 3, wobei die erste Spannungsquelle (V_{S1}) eine Spannung, die niedriger als 60 V ist, und eine Leistung, die mit dem Betrieb elektrischer Hilfsmittel des zu versorgenden Fahrzeugs kompatibel ist, liefern kann und die zweite Spannungsquelle (V_{S2}) eine hohe Spannung und eine Leistung, die mit dem Betrieb der elektrischen Hauptmittel des zu versorgenden Fahrzeugs kompatibel ist, liefern kann.

5. System nach einem der Ansprüche 1 bis 4, wobei das Geschwindigkeitsmessmittel eine Geschwindigkeitsmesseinheit (40) ist, die einen Rechner (42) umfasst, der mit einem Geschwindigkeitssensor (41) verbunden ist, wobei der Sensor ein Signal erzeugen kann, anhand dessen der Rechner einen Messwert der Geschwindigkeit eines Fahrzeugs, das auf dem Straßenabschnitt fährt, bestimmen kann.

6. System nach einem der Ansprüche 1 bis 4, wobei das Geschwindigkeitsmessmittel ein Geschwindigkeitsmesssystem (140) ist, das einen Rechner (142) umfasst, der mit mehreren Antennen (141.i) verbunden ist, wobei jede Antenne einem Segment (11.i) zugeordnet ist und wenigstens zwei in einer Längsrichtung der Straße voneinander beabstandete Keulen besitzt, wobei jede Antenne ein Signal auffangen kann, das von einem angepassten Sender ausgesendet wird, mit dem ein Schleifschuh des Fahrzeugs versehen ist, und ein Signal erzeugen kann, anhand dessen der Rechner die aktuelle Geschwindigkeit des Fahrzeugs bestimmen kann.

7. System nach Anspruch 6, wobei die Antenne des Geschwindigkeitsmessmittels asymmetrisch ist, derart, dass sie die Bestimmung der Richtung der aktuellen Geschwindigkeit des Fahrzeugs ermöglicht.

8. Verfahren für die Verwendung eines Systems für die Versorgung durch den Boden nach einem der Ansprüche 1 bis 7, das die Schritte umfasst, die darin bestehen:
- einen Messwert der aktuellen Geschwindigkeit eines Fahrzeugs zu erfassen;
- die gemessene Geschwindigkeit mit einer Schwellengeschwindigkeit (V₀) zu vergleichen; und
dann, wenn die gemessene Geschwindigkeit niedriger als die Schwellengeschwindigkeit ist, das Auswahlmittel (38) jedes Segments eines Straßenabschnitts, auf dem das Fahrzeug fährt, zu steuern, damit es mit der ersten Spannungsquelle (V_{S1}) verbunden wird, die eine niedrige Versorgungsspannung liefern kann; oder
dann, wenn die aktuelle Geschwindigkeit höher oder gleich der Schwellengeschwindigkeit ist, das Auswahlmittel (38) jedes Segments eines Straßenabschnitts, auf dem das Fahrzeug fährt, zu steuern, damit es mit der zweiten Spannungsquelle (V_{S2}) verbunden wird, die eine hohe Versorgungsspannung liefern kann.

## Claims

1. A ground level power supply system (10) for a non-guided electric vehicle (1), that has a pair of power supply tracks including a conductor track referred to as live conductor track (11) capable of being brought to a supply voltage, and a conductor track referred to as neutral conductor track (12) for the return of the current, with the neutral track running parallel to the live track and the live track consisting of a plurality of rectangular segments (11.i), disposed end to end, each segment being electrically isolated from its neighbours, **characterised in that**:
- the system comprises a first voltage source (35) capable of supplying a low supply voltage (V_{S1}) and a second voltage source (36) capable of supplying a high supply voltage (V_{S2});
- each segment is connected by a selection means (38) either to the first voltage source or to the second voltage source;
- the system comprises at least one speed measuring means (40; 140) for measuring an instantaneous speed of a non guided electric vehicle travelling over a section (Dj) of a roadway, equipped with the system; and
- a selection device (39) capable of acquiring the instantaneous speed of a vehicle measured by the speed measuring means, then comparing the measured speed with a threshold speed (V₀) and controlling the or each selection means based on the results of the comparison.

2. The power supply system according to claim 1, wherein the selection device (39) is such that if the measured speed is lower than the threshold speed, the or each selection means is controlled in a manner such that each segment of the section is connected to the first voltage source; and if the measured speed is higher than or equal to the threshold speed, the or each selection means is controlled in a manner such that each segment of the section is connected to the second voltage source.

3. The system according to claim 1 or claim 2, wherein each segment (11.i) of the live conductor track (11) is electrically connected to the selection means (38) via a controlled switch (30.i), adapted to be switched by way of a control means (50.i) depending on the presence of a vehicle directly above the considered segment or over an adjacent segment, so as to apply to the considered segment of the live track, the supply voltage output by the voltage source selected by the selection means.

4. The system according to any one of claims 1 to 3, wherein the first voltage source (V_{S1}) is capable of outputting a voltage lower than 60 V and a power that is compatible with the operation of an auxiliary electrical means of a vehicle to be powered, and the second voltage source (V_{S2}) is capable of outputting a high voltage and a power that is compatible with the operation of a principal electrical means of a vehicle to be powered.

5. The system according to any one of claims 1 to 4, wherein the speed measuring means is a speed measuring unit (40) comprising a computing unit (42) connected to a speed sensor (41), the sensor generating a signal based on which the computing unit determines a measurement of the speed of a vehicle travelling over the section of a roadway.

6. The system according to any one of claims 1 to 4, wherein the speed measuring means is a speed measuring system (140) comprising of a computing unit (142) connected to a plurality of antennas (141.i), each antenna being associated with a segment (11.i) and having at least two lobes at a distance from each other along a longitudinal direction of the roadway, with each antenna picking up a signal transmitted by a suitable transmitter with which a contact shoe of the vehicle is provided, and generating a signal based on which the computing unit determines the instantaneous speed of the vehicle.

7. The system according to claim 6, wherein the antenna of the speed measuring means is asymmetrical in a manner such as to enable the determination of the direction of the instantaneous speed of the vehicle.

8. A method for using a ground level power supply system in accordance with any one of claims 1 to 7, including the steps consisting of:
- acquiring a measurement of the instantaneous speed of a vehicle;
- comparing the measured speed with a speed threshold (V₀); and
if the measured speed is lower than the threshold speed, controlling the selection means (38) of each segment of a section of a roadway over which the vehicle is travelling in order to ensure that it is connected to the first voltage source (V_{S1}) delivering a low supply voltage; or
if the instantaneous speed is higher than or equal to the threshold speed, controlling the selection means (38) of each segment of a section of a roadway over which the vehicle is travelling in order to ensure that it is connected to the second voltage source (V_{S2}) delivering a high supply voltage.
